(19)

Europäisches Patentamt
European Patent Office
Office européen des brevets

(11) **EP 3 192 375 A1**

(12) **EUROPEAN PATENT APPLICATION**

(43) Date of publication:
**19.07.2017 Bulletin 2017/29**

(51) Int Cl.:
**A23G 3/02** (2006.01)   **B29C 67/00** (2017.01)
**A23P 30/00** (2016.01)   **A23P 20/20** (2016.01)

(21) Application number: **16000067.5**

(22) Date of filing: **13.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Katjes Fassin GmbH. + Co. Kommanditgesellschaft 46446 Emmerich (DE)**

(72) Inventors:
• **BÜLENT, Aydin**
  **46399 Bocholt (DE)**
• **OSSENBRINK, Dirk**
  **47533 Kleve (DE)**

(74) Representative: **Herzog, Fiesser & Partner Patentanwälte PartG mbB Immermannstrasse 40 40210 Düsseldorf (DE)**

(54) **PRINTER FOR CONFECTIONERY ITEMS**

(57)    The invention generally relates to a printer. The invention further relates to a process for the preparation of an item of confectionery, an item of confectionery and a use of a printer. The invention relates to a printer comprising as printer components:
a. a first supply (905);
b. a second supply (904);
c. a mixing chamber (1003)having a mixer (920), a first inlet (1001), a second inlet (1002) and an outlet (1004);
d. a nozzle (901);
e. a support surface for a printed item;
f. a means for moving the nozzle in a 3-dimensional trajectory relative to the support surface;

wherein:
the first supply (905) is in fluid communication with the mixing chamber (1003) via the first inlet (1001) of the mixing chamber (1003);
the second supply (904) is in fluid communication with the mixing chamber (1003) via the second inlet (1002) of the mixing chamber (1003);
the mixing chamber (1003) is in fluid communication with the nozzle (901) via the outlet (1004) of the mixing chamber (1003).

Figure 1

**Description**

Field of the Invention

The invention generally relates to a printer. The invention further relates to a process for the preparation of an item of confectionery, an item of confectionery and a use of a printer.

Background

Confectionery items and methods for preparing confectionery items can be found in the art.
US Patent No. 6200125 describes a method for manufacturing a decorative confectionary article by means of heating masses which differ to each other and then feeding them via a nozzle to a surface.
US2006044705 describes a confection comprising a base composition, at least one high-potency sweetener and at least one sweet taste improving composition.
US Patent No. 7223428 describes a method for manufacturing a decorative confectionary article by means of feeding a batch of confectionary mass into a molding device.
US Patent No. 4501544 involves producing a confectionary article by means of preparing a first confectionary mass and a basic confectionary mass, wherein the first confectionary mass is heated and added to a mold in batches. This mold is exposed to a vibration in order to compact the confectionary mass before a second mold is connected to the first mold and the basic confectionary mass is introduced to said second mold in order to produce the end product.
EP2820957 describes a method for manufacturing an embossed decorative element for a confectionary article which involves the use of a mold.

Brief Description

The invention is generally based on the object of providing an apparatus for the preparation of confectionery items. More specifically, it is an object of the invention to provide an apparatus which allows more efficient or flexible preparation of confectionery items or both. It is also an object of the invention to provide an apparatus which allows the preparation of confectionery items having an improved firmness.
One particular object of the invention is to provide an apparatus for the preparation of confectionery items which might be suitable for vegetarians, in particular an apparatus which allows for a preparation which is also more efficient, more flexible, provides confectionery items with an improved firmness, or two or more selected therefrom.
A contribution to achieving at least one of the above described objects is made by the subject matter of the category forming claims of the invention. A further contribution is made by the subject matter of the dependent claims of the invention which represent specific embodiments of the invention.

Detailed Description

A contribution to achieving at least one of the above described objects is made by the following embodiments.

|1| A printer comprising as printer components:

a. a first supply;
b. a second supply;
c. a mixing chamber having a mixer, a first inlet, a second inlet and an outlet;
d. a nozzle;
e. a support surface for a printed item;
f. a means for moving the nozzle in a 3-dimensional trajectory relative to the support surface;

wherein:

the first supply is in fluid communication with the mixing chamber via the first inlet of the mixing chamber;
the second supply is in fluid communication with the mixing chamber via the second inlet of the mixing chamber;
the mixing chamber is in fluid communication with the nozzle via the outlet of the mixing chamber.

|2| The printer according to embodiment In wherein the mixer is a static mixer.

|3| The printer according to embodiment |2|, wherein the static mixer comprises a screw channel.

|4| The printer according to embodiment |1|, wherein the mixer is a dynamic mixer.

|5| The printer according to any of the preceding claims, wherein one or both of the following criteria is/are satisfied:

  a. The first supply comprises at least about 40 wt. %, preferably at least about 50 wt. %, more preferably at least about 60 wt. % sweetener;
  b. The second supply comprises at least about 40 wt. %, preferably at least about 50 wt. %, more preferably at least about 60 wt. % sweetener.

[6| The printer according to any of the preceding embodiments, wherein the first supply or the second supply or both satisfy one or more of the following criteria:

  a. pH in the range from about 5.5 to about 8.5, preferably in the range from about 6 to about 8, more preferably in the range from about 6.5 to about 7.5;
  b. Hydrocolloid content in the range from about 0.1 to about 15 wt. %, preferably in the range from about 1 to about 10 wt. %, more preferably in the range from about 1.5 to about 5 wt. %, based on the dry weight of the supply;
  c. Acid content in the range from about 0 to about 0.1 wt. %, preferably in the range from about 0 to about 0.1, more preferably in the range from about 0 to about 0.01 based on the dry weight of the supply;
  d. Complex viscosity in the range from about 700 to about 1300 Pas, preferably in the range from about 1000 to about 1250 Pa·s, more preferably in the range from about 1100 to about 1200 Pa·s;
  e. Loss modulus in the range from about 3000 to about 7000 Pa, preferably in the range from about 4000 to about 4500 Pa, more preferably in the range from about 4700 to about 5200 Pa;
  f. Storage modulus in the range from about 5000 to about 15000 Pa, preferably in the range from about 9000 to about 13000 Pa, more preferably in the range from about 10000 to about 12000 Pa;
  g. Water content in the range from about 7 to about 45 wt. %, preferably in the range from about 10 to about 35 wt. %, more preferably in the range from about 15 to about 25 wt. % based on the total weight of the supply.

|7| The printer according to any of the preceding embodiments, wherein the first supply or the second supply or both satisfy one or more of the following criteria:

  a. pH in the range from about 2 to about 5, preferably in the range from about 2.5 to about 4.5, more preferably in the range from about 3 to about 4;
  b. Hydrocolloid content in the range from about 0 to about 0.1 wt. %, preferably in the range from about 0 to about 0.1 wt. %, more preferably in the range from about 0 to about 0.01 wt. %, based on the dry weight of the supply;
  c. Acid content in the range from about 0.1 to about 15 wt. %, preferably in the range from about 0.5 to about 10 wt. %, more preferably in the range from about 1 to about 4 wt. %, based on the dry weight of the supply;
  d. Complex viscosity in the range from about 5 to about 50000 Pa·s, preferably in the range from about 30 to about 20000 Pa·s, more preferably in the range from about 600 to about 9000 Pa·s;
  e. Loss modulus in the range from about 50 to about 500000 Pa, preferably in the range from about 2500 to about 100000 Pa, more preferably in the range from about 5000 to about 50000 Pa;
  f. Storage modulus in the range from about 10 to about 75000 Pa, preferably in the range from about 1800 to about 50000 Pa, more preferably in the range from about 3500 to about 15000 Pa;
  g. Water content in the range from about 7 to about 45 wt. %, preferably in the range from about 10 to about 35 wt. %, more preferably in the range from about 15 to about 25 wt. %, based on the total weight of the supply.

|8| The printer according to any of the preceding embodiments, wherein one or both of the following criteria is/are satisfied:

  a. The length of the shortest path between the first inlet of the mixing chamber and the outlet of the mixing chamber is in the range from about 1 to about 30 cm, preferably in the range from about 2 to about 20 cm, more preferably in the range from about 3 to about 15 cm.
  b. The length of the shortest path between the second inlet of the mixing chamber and the outlet of the mixing chamber is in the range from about 1 to about 30 cm, preferably in the range from about 2 to about 20 cm, more preferably in the range from about 3 to about 15 cm.

|9| The printer according to any of the preceding embodiments, wherein the nozzle has an exit aperture with a cross sectional area in the range from about 0.1 to about 6 mm$^2$, preferably in the range from about 0.3 to about 3 mm$^2$,

more preferably in the range from about 0.4 to about 1.7 mm$^2$, most preferably in the range form about 0.5 to about 1.2 mm$^2$.

|10| The printer according to any of the preceding embodiments, wherein one or both of the following criteria is/are satisfied:

   a. The first supply is provided in a detachable cartridge;
   b. The second supply is provided in a detachable cartridge.

|11| The printer according to any of the preceding embodiments, wherein the mixing chamber comprises a means for extruding fluid through the outlet. Preferred extruding means in this context are a pressure or a pump or both.

|12| The printer according to any of the preceding embodiments, wherein one or both of the following criteria is/are satisfied:

   a. The capacity of the first supply is in the range from about 0.01 to about 10001, preferably in the range from about 0.1 to about 800 1, more preferably in the range from about 0.3 to about 7001;
   b. The capacity of the second supply is in the range from about 0.01 to about 10001, preferably in the range from about 0.1 to about 8001, more preferably in the range from about 0.3 to about 7001.

In one aspect of this embodiment, one or both of the following criteria is/are satisfied:

   a. The capacity of the first supply is in the range from about 0.01 to about 10 1, preferably in the range from about 0.1 to about 8 1, more preferably in the range from about 0.3 to about 71;
   b. The capacity of the second supply is in the range from about 0.01 to about 101, preferably in the range from about 0.1 to about 81, more preferably in the range from about 0.3 to about 71.

In another aspect of this embodiment, one or both of the following criteria is/are satisfied:

   a. The capacity of the first supply is in the range from about 10 to about 1000 1, preferably in the range from about 50 to about 800 1, more preferably in the range from about 100 to about 7001;
   b. The capacity of the second supply is in the range from about 10 to about 10001, preferably in the range from about 50 to about 8001, more preferably in the range from about 100 to about 7001.

|13| The printer according to any of the preceding embodiments, wherein the capacity of the mixing chamber is in the range from about 0.01 to about 15 1, preferably in the range from about 0.1 to about 8 1, more preferably in the range from about 0.2 to about 2 1. In use, it is preferred that the mixing chamber is filled to capacity

|14| The printer according to any of the preceding embodiments, having an electrical power consumption in the range from about 10 to about 500 W, preferably in the range from about 15 to about 400 W, more preferably in the range from about 20 to about 300 W.

|15| The printer according to any of the preceding embodiments, wherein the mixing chamber is in fluid communication with 2 or more, preferably 5 or more, more preferably 10 or more, most preferably 20 or more nozzles.

|16| A process for the preparation of an item of confectionery comprising the following preparation steps:

   a. Provision of a printer according to any of the preceding embodiments;
   b. Supplying:

   - a first fluid from the first supply to the mixing chamber, and
   - a second fluid from the second supply to the mixing chamber;

   c. Mixing the first fluid and the second fluid in the mixing chamber to obtain a precursor material;
   d. Ejecting the precursor fluid from the mixing chamber via the nozzle onto the support surface to obtain the item of confectionery.

|17| The process according to embodiment |16|, wherein the nozzle traces a 3-D trajectory.

|18| The process according to embodiment |16| to |17|, wherein the item of confectionery is a 3-D form.

|19| The process according to any of the embodiments |16| to |18|, wherein the item of confectionery has a non-moldable form. Preferred non-moldable forms are those which could not be formed in a removed from a mold without deformation of the mold.

|20| The process according to any of the embodiments |16| to |19|, wherein the weight ratio of the second fluid to the first fluid supplied in step b. is in the range from about 1:20 to about 3:2, preferably in the range from 4:5 to 10:13, more preferably in the range from about 99:100 to about 100:105.

|21| The process according to any of the embodiments |16| to |20|, wherein the precursor material satisfies one or more of the following criteria:

a. Complex viscosity in the range from about 500 to about 5000 Pa·s, preferably in the range from about 1000 to about 4000 Pa·s, more preferably in the range from about 1600 to about 3000 Pa·s;
b. Loss modulus in the range from about 1000 to about 13000 Pa, preferably in the range from about 3000 to about 10000 Pa, more preferably in the range from about 4000 to about 6000 Pa;
c. Storage modulus in the range from about 5000 to about 50000 Pa, preferably in the range from about 15000 to about 35000 Pa, more preferably in the range from about 20000 to about 25000 Pa;
d. pH in the range from about 2 to about 5.5, preferably in the range from about 3 to about 5, more preferably in the range from about 3.5 to about 4.5, most preferably in the range from about 3.8 to about 4.2;
e. water content in the range from about 15 to about 24 wt. %, preferably in the range from about, preferably in the range from about 16 to about 23 wt. %, more preferably in the range from about 17 to about 22 wt. %.

|22| The process according to any of the embodiments |16| to |21|, wherein the precursor material exits the nozzle at a rate in the range from about 0.05 to about 5 g/s, preferably in the range from about 0.1 to about 2 g/s, more preferably in the range from about 0.15 to about 1 g/s.

|23| An item of confectionery obtainable by a process according to any of the embodiments |16| to |22|.

|24| A use of a printer according to any of the embodiments |1| to |15| for preparing an item of confectionery.

As well as the above embodiments individually, the invention relates to combinations of two or more embodiments selected from the above embodiments and other embodiments throughout the specification.

Gels

Preferred gels in the context of the invention are elastically deformable solids. Preferred gels are not fluids, more preferably neither a semi-fluid nor a fluid. In one embodiment, the centre of mass of a 1 cm$^3$ cube of the gel does not drop more than about 2 mm, preferably not more than about 1 mm, more preferably not more than about 0.5 mm, still more preferably not more than about 0.1 mm, over a course of 10 minutes at 25 °C when stood on a flat surface.
In one embodiment, preferred gels have a Shore hardness A in the range from about 1 to about 70, preferably in the range from about 2 to about 50, more preferably in the range from about 3 to about 30, still more preferably in the range from about 4 to about 20, measured at 25 °C. In one embodiment, preferred gels have a complex viscosity in the range from about 2000 to about 10000 Pa·s, preferably in the range from about 2200 to about 8000 Pa·s, more preferably in the range from about 2400 to about 6000 Pa·s.
In one embodiment, preferred gels have a loss modulus in the range from about 4000 to about 20000 Pa, preferably in the range from about 4500 to about 18000 Pa, more preferably in the range from about 5000 to about 15000 Pa.
In one embodiment, preferred gels have a storage in the range from about 20000 to about 70000 Pa, preferably in the range from about 22000 to about 60000 Pa, more preferably in the range from about 25000 to about 50000 Pa.
In one embodiment, the gel comprises a cross-linked polymer structure. In another embodiment, the gel does not comprise a cross-linked polymer structure.
In one embodiment, the gel is too firm to be workable or printable.
In one embodiment, a preferred paste cannot be expelled from a 1 ml syringe having a circular exit aperture with a diameter of 1.5 mm and having a circular plunger cross section having a diameter of 15 mm with hand force. In one aspect of this embodiment, the paste cannot be expelled with a force of 20 N, preferably 30 N, more preferably 50 N.
A preferred gel has a density in the range from about 300 to about 2000 g/l, preferably in the range from about 350 to about 1800 g/l, more preferably in the range from 375 to about 1500 g/l. In one embodiment, the gel has a higher density, preferably in the range from about 1100 to about 1500 g/l, preferably in the range from about 1200 to about 1450 g/l, more preferably in the range from about 1300 to about 1400 g/l. In another embodiment, the gel has a lower density, preferably in the range from about 250 to about 550 g/l, preferably in the range from about 300 to about 500 g/l, most preferably in the range from about 350 to about 450 g/l.

Pastes

Preferred pastes in the context of the invention are fluids or semi fluids, preferably semi fluids. Preferred pastes are viscous fluids. A preferred paste is firm enough to hold a shape under its own weight, but not so firm that it is not non-elastically deformable. In one embodiment, a preferred paste can be expelled from a 1 ml syringe having a circular exit aperture with a diameter of 1.5 mm and having a circular plunger cross section having a diameter of 15 mm, preferably with hand force. In one aspect of this embodiment, the paste can be expelled with a force of 50 N, preferably 30 N, more preferably 20 N.

In one embodiment, preferred pastes have a complex viscosity in the range from about 500 to about 3500 Pa·s, preferably in the range from about 1000 to about 3000 Pa·s, more preferably in the range from about 2000 to about 2800 Pa·s.

In one embodiment, preferred pastes have a complex viscosity in the range from about 500 to about 3200 Pa·s, preferably in the range from about 600 to about 2500 Pa·s, more preferably in the range from about 700 to about 2000 Pa·s.

In one embodiment, the paste has a Shore hardness A in the range from about 0.1 to about 20, preferably in the range from about 1 to about 15, more preferably in the range from about 2 to about 5.

In one embodiment, preferred pastes have a loss modulus in the range from about 2000 to about 6300 Pa, preferably in the range from about 3500 to about 5500 Pa, more preferably in the range from about 4000 to about 5000 Pa.

In one embodiment, preferred pastes have a loss modulus in the range from about 2000 to about 6300 Pa, preferably in the range from about 3000 to about 5500 Pa, more preferably in the range from about 3500 to about 5000 Pa.

In one embodiment, preferred pastes have a Storage modulus in the range from about 5000 to about 30000 Pa, preferably in the range from about 16000 to about 28500 Pa, more preferably in the range from about 19000 to about 27000 Pa.

In one embodiment, preferred pastes have a Storage modulus in the range from about 5000 to about 30000 Pa, preferably in the range from about 10000 to about 25000 Pa, more preferably in the range from about 18000 to about 22000 Pa.

Printer

A contribution to achieving at least one of the above mentioned objects is made by a printer, in particular for the preparation of confectionery items.

The printer is preferably a 3-D printer, preferably suitable for printing 3-D forms. The printer preferably comprises a means for moving a nozzle in a 3-D trajectory and a support surface for supporting a printed 3-D form.

In one embodiment, the printer is suitable for printing a non-moldable form. One limitation of molding is that certain shapes are unattainable, often because the mold can not be subsequently removed from the molded body. Preferred printers according to the invention allow such limitations to be obviated. In one embodiment, preferred non-moldable forms are those which can not be prepared by inserting a fluid into a mold, solidifying the fluid and removing the solidified form from the mold. In one embodiment, a confectionery item is prepared which has a height and a diameter perpendicular to the height, wherein the diameter is not a monotonic function of the height.

Mixing Chamber

Preferred mixing chambers allow the first supply and the second supply to mix before reaching the nozzle. According to the invention, it is preferred for the mixer to comprise a mixer. The mixing chamber according to the invention comprises a first inlet, a second inlet and an outlet.

In one embodiment, it is preferred that the contact between the supplies before arriving at the mixer is reduced. In one aspect of this embodiment, it is preferred for the path length between the point of first contact between the two supplies and the point at which the supplies arrive at the mixer is short, preferably as short as possible, preferably less than about 30 mm, more preferably less than about 10 mm, further more preferably less than about 5 mm, most preferably less than about 1 mm.

<u>Mixer</u>

Preferred mixers according to the invention increase the level of mixing of the first supply and the second supply when passing through the mixing chamber.

In one embodiment, the mixer is a static mixer. In one aspect of this embodiment, the mixer has no moving parts. In another aspect of this embodiment, the mixer increases the path length through the mixing chamber, either from the first inlet to the outlet, or from the second inlet to the outlet, or both. In one aspect of this embodiment, the mixer increases the curvature of the shortest path either between the first inlet to the outlet or between the second inlet to the outlet or both. The curvature along the path is preferably the following quantity:

$$\int (d^2x/ds^2)^2 + (d^2y/ds^2)^2 + (d^2z/ds^2)^2 \, ds$$

wherein s is a length parameter along the shortest path, x, y and z are Cartesian coordinates and the integral is taken over the entire length of the shortest path. The preferred static mixer is a helical static mixer. Preferred helical static mixers comprise about 2 to about 100 baffles, preferably about 5 to about 50 baffles, more preferably about 10 to about 30 baffles.

In one embodiment, the mixer is a dynamic mixer. In one aspect of this embodiment, the mixer comprises a moving part. In one aspect of this embodiment, the mixer is one or more selected from the group consisting of: a paddle mixer, a v-blender and a ribbon blender.

<u>First and Second Supplies</u>

A preferred printer has a first supply and a second supply. The first supply is different to the second supply, preferably in chemical composition.

In one embodiment, one of the first supply and the second supply is a base mass as described herein. In one embodiment, one of the first supply and the second supply is an acid mass as described herein. In a preferred embodiment, one of the first supply and the second supply is a base mass as described herein and the other is an acid mass as described herein.

Preferred supplies are liquids or pastes.

<u>Small Scale Printer</u>

One embodiment of the invention relates to a small scale printer, preferably for use in-store or at home.

In one aspect of this embodiment, one or both of the following criteria is/are satisfied:

a. The capacity of the first supply is in the range from about 0.01 to about 10 1, preferably in the range from about 0.1 to about 8 1, more preferably in the range from about 0.3 to about 71;
b. The capacity of the second supply is in the range from about 0.01 to about 101, preferably in the range from about 0.1 to about 81, more preferably in the range from about 0.3 to about 71.

In a preferred aspect of this embodiment, the first supply or the second supply or both is/are provided in a detachable cartridge.

It is preferred in one aspect of this embodiment that the printer has a total of 1 to 10 nozzles, more preferably 1 to 5 nozzles, further more preferably 1 to 3 nozzles, most preferably 1 nozzle.

In one aspect of this embodiment, the printer is portable, preferably suitable to be lifted by a single person.

In one aspect of this embodiment it is preferred for the printer to be disassemblable, preferably with parts a.-d. being detachable from parts e. & f..

<u>Large Scale Printer</u>

One embodiment of the invention relates to a large scale printer, preferably for industrial scale production.

In one aspect of this embodiment, one or both of the following criteria is/are satisfied:

a. The capacity of the first supply is in the range from about 10 to about 1000 1, preferably in the range from about 50 to about 800 1, more preferably in the range from about 100 to about 7001;
b. The capacity of the second supply is in the range from about 10 to about 10001, preferably in the range from about 50 to about 8001, more preferably in the range from about 100 to about 7001.

In preferred aspects of this embodiment, the first supply or the second supply or both is/are provided in a tank or as a continuous feed.

It is preferred in one aspect of this embodiment that the printer has more than one nozzle. Various envisaged configurations are the following:

- A single first supply, a single second supply, a single mixing chamber and 2 or more nozzles in fluid connection with the mixing chamber;
- A single first supply, a single second supply and 2 or more mixing chambers, each in fluid communication with a single nozzle;
- A single first supply, a single second supply, 2 or more mixing chambers, one or more of the mixing chambers being in fluid communication with 2 or more nozzles.

Hydrocolloid

The precursor material and the printed item of confectionery preferably comprise a hydrocolloid. The hydrocolloid is preferably provided in the first supply or in the second supply or in both, more preferably in either the first supply or the second supply. In one embodiment, from about 80 to about 100 wt. %, preferably from about 95 to about 100 wt. %, more preferably from about 99 wt. % to about 100 wt. % of the hydrocolloid is provided in one of the supplies, the remainder being provided in the other supply. Preferred hydrocolloids are suitable for forming a gel with water. A preferred hydrocolloid is one or more selected from the group consisting of: a poly sugar, a peptide and a poly peptide; preferably a poly sugar.

Poly sugar

In one embodiment, the hydrocolloid is a poly sugar. Preferred poly sugars are molecules built from at least 3, preferably at least 10 and more preferably at least 20 sugar units. In one embodiment the poly sugar is a homo sugar. In another embodiment, the poly sugar is a hetero sugar. The poly sugar preferably comprises at least about 50 wt. %, more preferably at least about 65 wt. %, most preferably at least about 65 wt. % galacturonic acid, preferably $\alpha$-D-galactonic acid. Another preferred sugar unit is Rhamnose. Furthermore, it is preferred that the hydroxy groups on the $C_2$ or $C_3$ atom of the galactonic acid units are at least partially acetylated or substituted with further natural sugars, in particular D-Galactose, D-Xylose, L-Arabinose or L-Rhamnose. Furthermore, it is preferred that the poly sugar is branched. The poly sugar is preferably branched at galactonic acid of the main chain.

Furthermore, it is preferred that the poly sugar is at least partially esterified, wherein esterification with an alcohol, preferably an alcohol of a $C_1$ to $C_{10}$ hydrocarbon, more preferably of a $C_1$ to $C_5$ hydrocarbon and particularly preferably of a $C_1$ to $C_3$ hydrocarbon, is preferred. Esterification with methanol is particularly preferred. It is preferred that between about 50 and about 80 %, preferably between about 52 and 70 %, more preferably between about 55 and 65 %, most preferably between about 59 and about 61 %, of the carboxylic acid groups on the main chain of the poly sugar are esterified.

Preferred poly sugars are one or more selected from the group consisting of: alginate, carrageenan, gellan, agarose, agaropectin and a pectin; preferably a pectin. Preferred pectins are citrus-pectins or apple pectins or both. These are commercially available, for example from Herbstreith & Fox KG Pektin-Fabriken.

The poly sugar preferably has a USA-SAG value (SAG - Strain-induced Alignment in a gel) of at least about 150°, preferably at least about 160°, more preferably at least about 170° USA-SAG. A high USA-SAG value indicates a high degree of esterifcation.

Polypeptide

Preferred polypeptides are molecules built of at least 10, preferably at least 50, more preferably at least 70 amino acids. Preferred polypeptides have a molecular weight of at least about 10,000 g/mol, preferably at least about 25,000 g/mol, more preferably at least about 100,000 g/mol. In some cases preferred polypeptides might have a molecular weight as high as 300,000 g/mol or less. Preferred polypeptides comprise less than about 5 wt. %, preferably less than about 3 wt. %, more preferably less than about 0.5 wt. %, tryptophan, based on the total weight of the polypeptide. Preferred poly peptides contain no tryptophan. Preferred polypeptides are gelatines. In one embodiment, it is preferred for the polypeptide to have an isoelectric point (IEP) in a pH range from about 4.7 to about 5.3, preferably in the range from about 4.8 to about 5.2, more preferably in the range from about 4.9 to about 5.1. In one embodiment, it is preferred for the polypeptide to have an isoelectric point (IEP) in a pH range from about 7.7 to about 9.2, preferably in the range from about 7.8 to about 9.1, more preferably in the range from about 7.9 to about 9.1, most preferably in the range from about 8 to about 9. Preferred polypeptides have a Bloom value in the range from about 140 to about 300, preferably in the range from about 200 to about 280, more preferably in the range from about 220 to about 270.

Acid

The precursor material and the printed item of confectionery preferably comprise an acid. The acid is preferably provided in the first supply or in the second supply or in both, more preferably in either the first supply or the second supply. In one embodiment, from about 80 to about 100 wt. %, preferably from about 95 to about 100 wt. %, more preferably from about 99 wt. % to about 100 wt. % of the acid is provided in one of the supplies, the remainder being provided in the other supply. In one embodiment, it is preferred for the acid to be distinct from the hydrocolloid. It is preferred that this acid is a Bronsted acid. The Bronsted acid preferably has a pKa in the range from about 3 to about 6.5, preferably two pKas in the range from about 3 to about 6.5, more preferably 3 pKas in the range from about 3 to about 6.5. Reference in this application to the total acid content preferably relates to the content determined by the titrimetric method provided herein. Preferred acids are organic acids. Preferred acids comprise two or more than two carboxylic acids groups, preferably three carboxylic acid groups. Preferred acids contain about 2 to about 20, preferably about 2 to about 7, more preferably about 3 to 4 carbon atoms per molecule. In one embodiment, a preferred acid is one or more selected from the group consisting of: oxalic acid, malonic acid, succinic acid, glutaric acid, adipic acid, pimelic acid, suberic acid, azelaic acid, sebacic acid, brassylic acid, citric acid, malic acid and lactic acid. In one embodiment, a preferred acid is an $\alpha$ hydroxy acid, preferably with two or more than two carboxylic acid groups. Preferred $\alpha$ hydroxy acids are one or more selected from the group consisting of: citric acid, malic acid and lactic acid. Citric acid is particularly preferred.

It is preferred according to the invention for the precursor material and the printed item of confectionery to comprise a buffer, preferably comprising one or more of the above mentioned preferred acids. Preferred pH buffers are suitable for reducing the sensitivity of the pH of a system to the amount of added acid or base. A preferred pH buffer preferably comprises a salt, preferably the salt of an acid base neutralisation, preferably a Bronsted acid base neutralisation.

In one embodiment, the buffer comprises a weak acid and its conjugate base. In one aspect of this embodiment, the weak acid and its conjugate base are present in the same molecule. In one embodiment the buffer comprises one or more selected from the group consisting of: a di-acid, a tri-acid and a tetra-acid, and salts thereof; preferably one or more selected from the group consisting of: a di-acid and a tri-acid, and salts thereof. In one embodiment, the buffer comprises a citrate. Preferred citrates are once or twice neutralised citric acid, preferably twice neutralised citric acid. In one embodiment, the buffer comprises tartrate, preferably once neutralised tartaric acid.

In one embodiment, the buffer comprises a weak base and its conjugate acid.

Sweetener

It is preferred for the precursor material and the printed item of confectionery to comprise a sweetener. Preferred sweeteners produce a sensation of sweetness in the mouth. Preferred sweeteners are a sugar or a sugar substitute or both; preferably a sugar. Preferred sugars in this context are built of one or two saccharide units. Preferred sugars are one or more selected from the group consisting of: sucrose, glucose, fructose and invert sugar syrup. Preferred sugar substitutes are one or more selected from the group consisting of: isomalt, mannitol, sorbitol and xylitol. In one embodiment the sweetener comprises a non hydrocolloidal poly sugar, preferably one or more selected from the group consisting of polydextrose and maltodextrin, more preferably maltodextrin.

Other constituents of the precursor material and printed confectionery item

Other preferred constituents of the precursor material and the printed confectionery item are one or more selected from the group consisting of: a milk product, a vegetable fat, an emulsifier, a colorant, an oil, an active ingredient, a plant extract and an aroma. A preferred oil is an essential oil. A preferred essential oil is one or more selected from the group consisting of: a eucalyptus oil, a menthol, an a mint oil. A preferred active ingredient is one or more selected from the group consisting of: an expectorant, an analgesic and an anti-inflammatory. A preferred plant extract is one or more selected from the group consisting of: a herb, a root and a bark extract. A preferred herb extract is an extract of one or more selected form the group consisting of: sage, plantain, primrose and okra. A preferred root extract is liquorice. A preferred aroma is a synthetic aroma or a natural aroma or both. A further preferred aroma is a fruit aroma. A particularly preferred confectionery item contains no material of animal origin, i.e. it is suitable for consumption by vegans.

The above described constituents can be provided in the first supply or in the second supply or in both.

Cartridge

In one embodiment, the first supply or the second supply or both is/are provided in a detachable cartridge. Preferred cartridges are adapted for containing a supply material and for ejecting the supply material. In one embodiment, it is preferred for the cartridge to comprise a rigid container having an internal volume.

There are at least two possible aspects of the cartridge. In one embodiment, the container is rigid. Preferably, the rigid container has solid walls, allowing the container to maintain a 3-dimensional hollow form. The rigid container is preferably stackable. In another embodiment, the container is not rigid. The non-rigid container preferably has flexible walls, such as a foil. A preferred non-rigid container is a pouch.

In one preferred embodiment, the container has an exit hole, or provision for an exit hole to be made. Such exit holes are preferably fitments, preferably adjusted to be mounted in a 3-D printer.

In one embodiment, the confectionery precursor material can be ejected by reducing the internal volume of the container. In one aspect of this embodiment, the cartridge comprises a moveable wall at the surface of the internal volume. A preferred movable wall is a plunger, this holds preferably for the rigid container. In the case of the non-rigid container, it is preferred that the container is compressed to cause the supply material to be ejected.

In one embodiment, the confectionery precursor material can be ejected by a gas pressure force. A preferred gas pressure force is provided by a pressurised gas supply. Preferred pressurised gas supplies are one or more selected from the group consisting of: a gas jet and a pressurised liquid.

It is preferred according to the invention for the internal volume of the container to be substantially filled by the supply material. The supply material preferably occupies at least about 90 %, more preferably at least about 99 %, further more preferably at least about 99.9 %, of the internal volume of the container, most preferably all of the internal volume of the container. It is preferred for the supply material in the container to be substantially free of air bubbles, preferably with less than about 1 %, more preferably less than about 0.1 %, further more preferably less than about 0.01 % of the internal volume of the container, most preferably none of the internal volume of the container, occupied by air bubbles.

It is preferred according to the invention for the internal volume of the container to be substantially filled by the supply material. The supply material preferably occupies at least about 90 %, more preferably at least about 99 %, further more preferably at least about 99.9 %, of the internal volume of the rigid container, most preferably all of the internal volume of the rigid container. It is preferred for the supply material in the rigid container to be substantially free of air bubbles, preferably with less than about 1 %, more preferably less than about 0.1 %, further more preferably less than about 0.01 % of the internal volume of the rigid container, most preferably none of the internal volume of the rigid container, occupied by air bubbles.

Base Mass

It is preferred for one of the first supply or the second supply to be a base mass. Preferred base masses are liquids or pastes, preferably liquids. A preferred base mass comprises the following:

    a. A sweetener;
    b. A hydrocolloid;
    c. Water.

In one embodiment, the base mass preferably has a pH in the range from about 5.5 to about 8.5, preferably in the range from about 6 to about 8, more preferably in the range from about 6.5 to about 7.5.

In one embodiment, the base mass preferably has a hydrocolloid content in the range from about 0.1 to about 15 wt. %, preferably in the range from about 1 to about 10 wt. %, more preferably in the range from about 1.5 to about 5 wt. %, based on the dry weight of the base mass.

In one embodiment, the base mass preferably has an acid content in the range from about 0 to about 0.1 wt. %, preferably in the range from about 0 to about 0.1, more preferably in the range from about 0 to about 0.01 based on the dry weight of the base mass.

In one embodiment, the base mass preferably has a complex viscosity in the range from about 700 to about 1300 Pa·s, preferably in the range from about 1000 to about 1250 Pa·s, more preferably in the range from about 1100 to about 1200 Pa·s.

In one embodiment, the base mass preferably has a loss modulus in the range from about 3000 to about 7000 Pa, preferably in the range from about 4000 to about 4500 Pa, more preferably in the range from about 4700 to about 5200 Pa.

In one embodiment, the base mass preferably has a storage modulus in the range from about 5000 to about 15000 Pa, preferably in the range from about 9000 to about 13000 Pa, more preferably in the range from about 10000 to about 12000 Pa.

In one embodiment, the base mass preferably has a water content in the range from about 7 to about 45 wt. %, preferably in the range from about 10 to about 35 wt. %, more preferably in the range from about 15 to about 25 wt. % based on the total weight of the base mass.

Acid Mass

It is preferred for one of the first supply or the second supply to be a base mass. Preferred acid masses are pastes or liquids, preferably liquids. A preferred base mass comprises the following:

    a. A sweetener;
    b. A hydrocolloid;
    c. Water.

In one embodiment, the acid mass preferably has a pH in the range from about 2 to about 5, preferably in the range from about 2.5 to about 4.5, more preferably in the range from about 3 to about 4.
In one embodiment, the acid mass preferably has a hydrocolloid content in the range from about 0 to about 0.1 wt. %, preferably in the range from about 0 to about 0.1 wt. %, more preferably in the range from about 0 to about 0.01 wt. %, based on the dry weight of the supply.
In one embodiment, the acid mass preferably has an acid content in the range from about 0.1 to about 15 wt. %, preferably in the range from about 0.5 to about 10 wt. %, more preferably in the range from about 1 to about 4 wt. %, based on the dry weight of the supply.
In one embodiment, the acid mass preferably has a complex viscosity in the range from about 5 to about 50000 Pa·s, preferably in the range from about 30 to about 20000 Pa·s, more preferably in the range from about 600 to about 9000 Pa·s;
In one embodiment, the acid mass preferably has a loss modulus in the range from about 50 to about 500000 Pa, preferably in the range from about 2500 to about 100000 Pa, more preferably in the range from about 5000 to about 50000 Pa.
In one embodiment, the acid mass preferably has a storage modulus in the range from about 10 to about 75000 Pa, preferably in the range from about 1800 to about 50000 Pa, more preferably in the range from about 3500 to about 15000 Pa.
In one embodiment, the acid mass preferably has a water content in the range from about 7 to about 45 wt. %, preferably in the range from about 10 to about 35 wt. %, more preferably in the range from about 15 to about 25 wt. %, based on the total weight of the supply.

Precursor Material

A contribution to achieving one or more of the above described objects is made by a process in which a first supply and a second supply are mixed to obtain a precursor material for printing. Preferred precursor materials are pastes.
In one embodiment, the precursor material has a complex viscosity in the range from about 500 to about 5000 Pa·s, preferably in the range from about 1000 to about 4000 Pa·s, more preferably in the range from about 1600 to about 3000 Pa·s.
In one embodiment, the precursor material has a loss modulus in the range from about 1000 to about 13000 Pa, preferably in the range from about 3000 to about 10000 Pa, more preferably in the range from about 4000 to about 6000 Pa.
In one embodiment, the precursor material has a storage modulus in the range from about 5000 to about 50000 Pa, preferably in the range from about 15000 to about 35000 Pa, more preferably in the range from about 20000 to about 25000 Pa.
In one embodiment, the precursor material has a pH in the range from about 2 to about 5.5, preferably in the range from about 3 to about 5, more preferably in the range from about 3.5 to about 4.5, most preferably in the range from about 3.8 to about 4.2.
In one embodiment, the precursor material has a water content in the range from about 15 to about 24 wt. %, preferably in the range from about, preferably in the range from about 16 to about 23 wt. %, more preferably in the range from about 17 to about 22 wt. %.

Nozzle

Preferred printers comprise one or more nozzle(s). Preferred nozzles a suitable for extruding a fluid or semi-fluid, preferably a highly viscous fluid. The nozzle body, aperture shape and cross-section area of aperture are preferably adapted to allow printing of 3-D forms, preferably with a high precision, preferably with a high delivery speed.

In one embodiment, the nozzle is suitable for administering a substance with a complex viscosity in the range from about 500 to about 5000 Pa·s, preferably in the range from about 1000 to about 4000 Pa·s, more preferably in the range from about 1600 to about 3000 Pa·s.

in one embodiment, the nozzle is suitable for administering a substance with a loss modulus in the range from about 1000 to about 13000 Pa, preferably in the range from about 3000 to about 10000 Pa, more preferably in the range from about 4000 to about 6000 Pa.

In one embodiment, the nozzle is suitable for administering a substance with a storage modulus in the range from about 5000 to about 50000 Pa, preferably in the range from about 15000 to about 35000 Pa, more preferably in the range from about 20000 to about 25000 Pa.

Means of Moving the Nozzle and the Support Surface

Preferred printers comprise a support surface for supporting a printed item of confectionery. Furthermore, preferred printers comprise a means for moving the nozzle relative to the support surface, preferably in a 3-D trajectory.

In one embodiment, the means allow the nozzle to be moved in 3 dimensions. In another embodiment, the means allow the support surface to be removed in 3 dimensions. In a further embodiment, the relative movement of the nozzle and the support surface is provided by movement of both the nozzle and of the support surface. In one aspect of this embodiment, one or two dimensions of movement is provided for the nozzle and one or two dimensions of movement is provided for the support surface.

In one embodiment, the means comprises guide rails which provide for movement for the nozzle or guide rails which provide for movement of the support surface or both.

Process for Preparation of an Item of Confectionery

A contribution to achieving one or more of the above referenced objects is made by a process for the preparation of an item of confectionery, preferably for printing an item of confectionery.

A preferred process for the preparation of an item of confectionery comprises the following preparation steps:

a. Provision of a printer according to the invention;
b. Supplying:

- a first fluid from the first supply to the mixing chamber, and
- a second fluid from the second supply to the mixing chamber;

c. Mixing the first fluid and the second fluid in the mixing chamber to obtain a precursor material;
d. Ejecting the precursor fluid from the mixing chamber via the nozzle onto the support surface to obtain the item of confectionery.

In a preferred embodiment of the invention, one of the first supply and the second supply is a base mass as described herein. In another embodiment of the invention, one or the first supply and the second supply is an acid mass as described herein. In a preferred embodiment, one of the first supply and the second supply is a base mass as described herein and the other is an acid mass as described herein.

In one embodiment, it is preferred for the mixing in step e. to be carried out at a temperature below 110 °C, preferably at a temperature in the range from about 15 to about 70 °C, more preferably at a temperature in the range from about 25 to about 55 °C, most preferably at a temperature in the range from about 35 to about 45 °C.

In one embodiment it is preferred for the extruding of step f. to occur within about 240 s, preferably within about 120 s, more preferably within about 60 s, further more preferably within about 30 and most preferably within about 10 s of the mixing step e..

Item of Confectionery

Preferred items of confectionery according to the invention are sugar confectionery. Preferred items of confectionery are soft confectionery items, hard confectionery items or hybrid confectionery items having one or more hard sections and one or more soft sections; preferably soft confectionery items. Preferred soft confectionery items are gels. Preferred soft confectionery items are elastically deformable. A preferred soft confectionery item has a Shore hardness A in the range from about 1 to about 70, preferably in the range from about 2 to about 50, more preferably in the range from about 3 to about 30, more preferably in the range from about 4 to about 20, measured at 25 °C. A preferred soft confectionery item is one or more selected from the group consisting of: a fruit gum, a wine gum, a toffee and a chewy sweet. Preferred hard confectionery items are one or more selected from the group consisting of: a boiled sweet and a hard toffee. One preferred embodiment of the confectionery item corresponds to a "Gum-mibonbon" in the sense of section D 3.2 on page 9 of the 2012 edition of the guidelines for confectionery items issued by the German Federation for Food Law and Food Science (Richtlinie für Zuckerwaren des Bund für Lebensmittelrecht und Lebensmittelkunde e. V., Auflage 2012).

In one embodiment, preferred items of confectionery are preferably substantially chocolate free. In one embodiment, the confectionery item comprises less than about 0.5 g/kg, preferably less than about 0.2 g/kg, more preferably less than about 0.1 g/kg of theobromine or a theobromine derivative or both. The item of confectionery is preferably substantially free of theobromine or a theobromine derivative or both.

In one embodiment, the item of confectionery is substantially free of cocoa butter. In one embodiment, the item of confectionery comprises less than about 15 wt. %, preferably less than about 5 wt. %, more preferably less than about 0.1 wt. % cocoa butter.

In one embodiment of the invention, the item of confectionery has a non-moldable shape. Preferred shapes are embodied in the claims and the figures section.

In one embodiment, the confectionery item has a water content in the range from about 1 to about 20 wt. %, preferably in the range rom about 5 to about 20 wt. %, more preferably in the range from about 10 to about 20 wt. %, most preferably in the range from about 15 to about 20 wt. %, based on the total weight of the confectionery item.

Test Methods

The following test methods are to be employed in the context of this application. Unless otherwise stated, the tests are to be carried out at a temperature of 25 °C, a pressure of 100 kPa and a relative air humidity of 50 %.

Shore Hardness A

Shore hardness A is measured according to the method of VDI/VDE 2516-page 2 (2004-04): "Härteprüfung an Kunststoffen und Gummi".

Bloom value

The Bloom value was measured using a bloom gelometer. The method described in United States Pharmacopeia XX, S. 1017 (1990).

Isoelectric point

The isoelectric point is measured as the pH value at which the solubility of the test substance is at a minimum. The minimum in the solubility is detected as the pH at which the extinction coefficient at 500 nm is at a maximum.

Water content

Water content is measured using a Sartorius MA 30 moisture detector (obtainable from Sartorius AG, Göttingen, Germany), a disposable aluminium tray and a spoon. The moisture detector is not pre-warmed before the measurement. Between measurements, the moisture detector is left to stand for at least 15 minutes with the hood open. The moisture detector is turned on. The following measurement parameters are used: 105 °C (Drying temperature), Auto, 0 - 100 %. The hood is opened and the aluminium tray set in position. The weighing scale is tared. A sample with a mass in the range from 5 to 5.5 g is provided. The aluminium tray is placed on a table and the sample is positioned evenly onto the tray. The tray is placed on the tray holder and the hood closed. The moisture detector starts the measurement process automatically. The moisture detector shows "END" when the measurement is complete.

pH

A 5g sample is dissolved in 95 g distilled water. The obtained solution is tested for pH with a WTW pocket pH Meter.

USA-SAG

A glucose-water gel with 65 % by weight of dry matter and a pH value of 2.2 was used as a standard reference sample. The sample is set as a gel in the standard beaker. The sample is removed from the beaker and the percentage change in the height under of the sample under its own weight in a set time in a set time is measured. The standard reference gel sinks 23.5 % in 2 minutes. The USA-SAG value of the test sample is the amount in gram of glucose which has to be added to 1 g of the test sample in 95 g water in order for the same proportional reduction in height to be observed in 2 minutes. The higher the USA-SAG value, the higher the gelling capability of a pectin.

Determination of acid content

Acid content is determined by titration with NaOH. A 5 g sample is placed in a 250 ml glass flask. 100 ml deionized water is added to the flask and the sample is dissolved in the water under stirring. The flask and contents are brought to 25 °C. 0.1 M NaOH(aq) is added to the flask under stirring until the pH reaches 8.7, as measured by a pH meter. The acid content, expressed as a percentage of the total weight of the sample, is given by the following formula:

$$\text{Acid content} = V \cdot 0.64 \, / \, m$$

wherein V is the volume of 0.1 M NaOH added, and m is the mass of sample tested.

Complex viscosity, Storage modulus and Loss modulus

Complex viscosity, in phase storage modulus and out of phase loss modulus are determined using a Rheometrics ARES rheometer set to 10 rads/s and 1% sheer amplitude. The sample is mounted between 2 parallel 25 mm plates and heated to the desired temperature in a nitrogen atmosphere.

Examples

Preparation of the base mass for examples A-F

375 g EU-Category 2 sugar from Pfeifer & Langen GmbH & Co. KG and pectin with a USA-SAG value of 170° USA-SAG from Cargill GmbH, in an amount as per table 1, were mixed dry in a 5 1 batch cooker in order to avoid lumping. 57 g maltodextrin from Roquette SA and a KNa-Tatrate and Ka-Citrate buffer system in an amount as per table 1 were added. 260 g water was added to the dry mixture under stirring in order to obtain a honey-like milky phase. 295 g glucose syrup from Roquette SA with a water content of 20.5 wt. % was added under stirring. The obtained mixture was heated at 105 °C to arrive at a base mass with a water content as per table 1.

Preparation of the acid mass for examples A-F

375 g EU-Category 2 sugar from Pfeifer & Langen GmbH & Co. KG was placed dry in a 5 1 batch cooker. 57 g maltodextrin from Roquette SA was added and the dry mixed. 125 g water was added to the dry mixture under stirring in order to obtain a honey-like milky phase. 295 g glucose syrup from Roquette SA with a water content of 20.5 wt. % was added under stirring.

The obtained mixture was heated at 110 °C to arrive at a water content as per table 1. The mass was cooled to 70 °C. A citric acid solution (1 : 0.7 - anhydrous citric acid: water) was added and mixed to obtain the acid mass to arrive at an amount of added acid as per table 1.

Table 1

|  | Water content | Acid content (g in 1 kg) | Pectin content (g in 1 kg) | Buffer content (g in 1 kg) |
|---|---|---|---|---|
| Acid mass 1 | 12 | 5.9 - 46.0 | 0 | 0 |
| Acid mass 2 | 10 | 5.9 - 46.0 | 0 | 0 |
| Acid mass 3 | 13 | 5.9 - 46.0 | 0 | 0 |
| Acid mass 4 | 20 | 5.9 - 46.0 | 0 | 0 |

(continued)

| | Water content | Acid content (g in 1 kg) | Pectin content (g in 1 kg) | Buffer content (g in 1 kg) |
|---|---|---|---|---|
| Base mass 1 | 28 | 0 | 60.6 | 49.2 |
| Base mass 2 Base mass 3 | 30 | 0 | 90.2 | 73.6 |
| | 23 | 0 | 37.2 | 30.4 |
| Acid mass - Base mass combinations | | | | |

Table 2

| Combination | A | B | C | D | E | F |
|---|---|---|---|---|---|---|
| Acid mass | 1 | 2 | 3 | 4 | 1 | 1 |
| Base mass | 1 | 2 | 3 | 1 | 2 | 3 |

For each combination, represented by a letter A-F, the examples detailed in table 3 were arrived at by varying the amount of acid in the acid mass. In each case, the amount of anhydrous acid, pH value, pectin content and buffer content correspond to the values of the quantities immediately subsequent to mixing.

Preparation of single mass

A single mass for example G (comparison) was prepared as follows:

375 g EU category 2 sugar from Pfeifer and Langen Gmbh & Co. KG, and an amount of pectin with a USA-SAG value of 170° from Cargill Gmbh to give a content of 30.3 g/kg immediately prior to printing were mixed dry in a 5 l batch cooker in order to avoid clumping. 57 g maltodextrin from Roquette SA (oligomer) and an amount of KNa-tartrate and K-citrate buffer to give a content of 24.6 g/kg immediately prior to printing were added. To this dry mixture was added 223 g water to obtain a honey-like milky phase. 295 g glucose syrup from Roquette SA with a water content of 20.5 wt. % was added under stirring. The mixture was heated to 108 °C and maintained at that temperature until it had a water content of 20 wt. %. It was then cooled to 90 °C to obtain the first mixture. Anhydrous citric acid was dissolved in water in a weight ration of 1:0.7 (citric acid:water). An amount of the citric acid solution was added to 100 g of the first mixture and mixed to obtain a second mixture with a content of added acid as given in Table 3. The second mixture was immediately transferred to a single 25 ml syringe with an exit aperture with cross sectional area of 1 mm$^2$, and the syringe closed to give a sterile, air free seal. The filled syringe was cooled to 20 °C for the mixture to set as a gel. The cooled syringe was stored for 1 hour.

Table 3 -

| Combination | Water content wt. %] | Amount of anhydrous acid [g/kg]/ pH-value/pectin content/buffer content/Example # | | | | |
|---|---|---|---|---|---|---|
| A | 20 | 11.7/4.0/30.3/24.6/A1 | 23.0/3.5/30.3/24.6/A2 | | | 5.9/4.3/30.3/24.6/A5 |
| B | 20 | 10.0/4.2/45.1/36.8/B1 | 23.0/3.8/45.1/36.8/B2 | 17.4/4.0/45.1/36.8/24.6/B3 | 7.7/4.4/45.1/36.8/B4 | 11.7/4.1/45.1/36.8/B5 |
| C | 18 | 2.9/4.2/18.6/15.2/C1 | 5.8/3.9/18.6/15.2/C2 | 14.7/3.6/18.6/15.2/C3 | 16.5/3.5/18.6/15.2/C4 | 29.0/2.8/18.6/15.2/C5 |
| D | 24 | 11.7/4.0/30.3/24.6/D1 | | | | |
| E | 21 | 10.0/4.2/45.1/36.8/E1 | 23.0/3.8/45.1/36.8/E2 | 17.4/4.0/45.1/36.8/24.6/E3 | 7.7/4.4/45.1/36.8/E4 | 11.7/4.1/45.1/36.8/E5 |

(continued)

| Combination | Water content wt. %] | Amount of anhydrous acid [g/kg]/ pH-value/pectin content/buffer content/Example # | | | | |
|---|---|---|---|---|---|---|
| F | 17.5 | 2.9/4.2/18.6/15.2/F1 | 5.9/3.9/18.6/15.2/F2 | 14.7/3.6/18.6/15.2/F3 | 16.5/3.5/18.6/15.2/F4 | 29.0/2.8/18.6/15.2/F5 |
| G | 20 | 11.7/4.0/30.3/24.6/G1 | | | | |

Double syringe printing for examples A-F

For the combinations A-F shown in table 2, the masses of the examples according to table 3 were printed as follows: The base mass and the acid mass were filled into the two chambers of a 25 ml double syringe fitted with a 5 cm long helical MIXPAC B-System static mixer with an exit aperture with cross sectional area of 1 mm$^2$, and 15 mixing battles commercially available from Sulzer Gmbh. The syringe loaded with the masses was heated in a microwave to 40 °C to make the two masses fluid. The masses were ejected via the mixer at a speed of 0.6 g/s to print 5.5 cm lines, stacked to obtain a wall of height 1 cm.

Single mass printing

For example G, the masses of the examples according to table 3 were printed as follows: The prepared syringe was heated in a microwave to 65 °C to convert the rigid gel into a paste-like fluid. The paste-like fluid was ejected at a speed of 0.6 g/s to print 5.5 cm lines, stacked to obtain a wall of height I cm.

Results for examples A-G

Results for examples A-G are displayed in table 4, in which the displayed examples have been allocated to the three columns on the basis of printability and stability of the printed wall.

Table 4

| Result | Discontinuous flow. No stable wall formed. | Stable wall formed | Not printable - blockage of the printing nozzle. |
|---|---|---|---|
| Example # | A5; C1; F1 | A1; F2; F3; F4; B1; E1; B4; E4; B5; C3; E5; C2; C4; G1 | C5; D1; A2; B2; B3; E3; F5; E2 |

Furthermore, for the examples which did allow for the printing of a stable wall, the product was ranked based on firmness: The products with the highest value of Shore hardness A are the most desirable and have been placed earliest in the following list.

Product firmness ranking: A1; B5; B1; E5; B4; C3; E4; E1; C4; C2; F3; F4; F2; G1.

Preparation of the base mass for examples H-L

375 g EU-Category 2 sugar from Pfeifer & Langen GmbH & Co. KG and pectin with a USA-SAG value of 170° USA-SAG from Cargill GmbH, in an amount as per table 5, were mixed dry in a 5 1 batch cooker in order to avoid lumping. 57 g maltodextrin from Roquette SA and a KNa-Tatrate and Ka-Citrate buffer system in an amount as per table 5 were added. 260 g water was added to the dry mixture under stirring in order to obtain a honey-like milky phase. 295 g glucose syrup from Roquette SA with a water content of 20.5 wt. % was added under stirring. The obtained mixture was heated at 105 °C to arrive at a base mass with a water content a per table 5.

Preparation of the acid mass for examples H-L

375 g EU-Category 2 sugar from Pfeifer & Langen GmbH & Co. KG was placed dry in a 5 1 batch cooker. 57 g maltodextrin from Roquette SA was added and the dry mixed. 125 g water was added to the dry mixture under stirring in order to obtain a honey-like milky phase. 295 g glucose syrup from Roquette SA with a water content of 20.5 wt. %

was added under stirring. The obtained mixture was heated at 110 °C to arrive at a water content as per table 5. The mass was cooled to 70 °C. A citric acid solution (1 : 0.7 - anhydrous citric acid : water) was added and mixed to obtain the acid mass in an amount so as to arrive at the pH value given in table 7.

Table 5

|  | Water content | Pectin content (g in 1 kg) | Buffer content (g in 1 kg) |
|---|---|---|---|
| Acid mass 5 | 10 | 0 | 0 |
| Acid mass 6 | 20 | 0 | 0 |
| Acid mass 7 | 22 | 0 | 0 |
| Acid mass 8 | 25 | 0 | 0 |
| Acid mass 9 | 27 | 0 | 0 |
| Base mass 4 | 10 | 60.6 | 49.2 |
| Base mass 5 | 20 | 60.6 | 49.2 |
| Base mass 6 | 22 | 60.6 | 49.2 |
| Base mass 7 | 25 | 60.6 | 49.2 |
| Base mass 8 | 27 | 60.6 | 49.2 |
| Acid mass - Base mass combinations for examples H-L | | | |

Table 6

| Combination | H | I | J | K | L |
|---|---|---|---|---|---|
| Acid mass | 5 | 6 | 7 | 8 | 9 |
| Base mass | 4 | 5 | 6 | 7 | 8 |

For each combination, represented by a letter H-L, the examples detailed in table 7 were arrived at by varying the amount of acid in the acid mass in order to arrive at the displayed pH, measured immediately subsequent to mixing.

Table 7

| pH | H (10 wt. % water) | I (18 wt. % water) | J (22 wt. % water) | K (25 wt. % water) | L (27 wt. % water) |
|---|---|---|---|---|---|
| 5 | ---- | - | - | --- | -- |
| 3,6 | ---- | + | + | --- | --- |
| 2,8 | ---- | - | - | --- | --- |
| + : printable at low pressure to yield a stable printed 3D form. Printed item is a "Cummibonbon" in the sense of section D 3.2 on page 9 of the 2012 edition of the guidelines for confectionery items issued by the German Federation for Food Law and Food Science (Richtlinie für Zuckerwaren des Bund für Lebensmittelrecht und Lebensmittelkunde e. V., Auflage 2012).<br>- : gel forms and can be printed, the printed 3D form is not stable and collapses slowly.<br>-- : gel forms and can be printed, the printed product has no 3D form because it collapses immediately.<br>--- : gel forms, but repeated blockage of the exit aperture of the syringe occurs during printing. This leads to an inhomogeneous print product which collapses immediately. | | | | | |

Figures

The following figures serve to further elucidate the invention without limiting its scope. The figures are not drawn to scale.

The figures show the following:

Figure 1     A schematic diagram of mixing chamber with connected supplies;
Figure 2a)     A schematic cross-section of a confectionery item;
Figure 2b)     A schematic diagram of further confectionery item;
Figure 3     A schematic cross section of a further confectionery item;
Figure 4     A schematic diagram of a further confectionery item;
Figure 5a)     A schematic diagram of a further confectionery item;
Figure 5b)     A schematic diagram of a further confectionery item;
Figure 6a)     A schematic cross-section of a further confectionery item;
Figure 6b)     A schematic cross-section of a further confectionery item;
Figure 7     A schematic diagram of a further confectionery item;
Figure 8     A schematic diagram of a device for preparing a confectionery item.

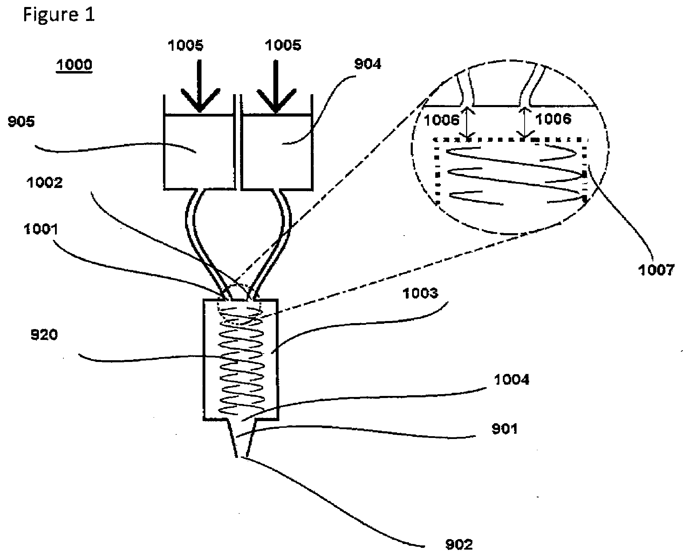

Figure 1 shows a schematic diagram of mixing chamber with connected supplies 1001. The first supply 905 is connected to the first inlet 1001 of the mixing chamber 1003 and the second supply 904 is connected to the second inlet 1002 of the mixing chamber 1003. The first supply 905 and the second supply 904 are each expelled propelled into the mixing chamber by an expulsive force 1005, in this case a mechanical pressure. In the mixing chamber 1003, the supplies 905&904 are mixed by a static mixer 920 located on the flow path between the inlets 1001 & 1002 and the outlet 1004. The mixed precursor material passes through the outlet 1004 to enter the nozzle 901, from which it exits via the aperture 902. The regions between the inlets 1001&1002 is blown up to show the distance 1006 between each inlet 1001,1002 and the boundary 1007 of the mixer 920. This distance 1006 is preferably short and in this embodiment is 2 mm.

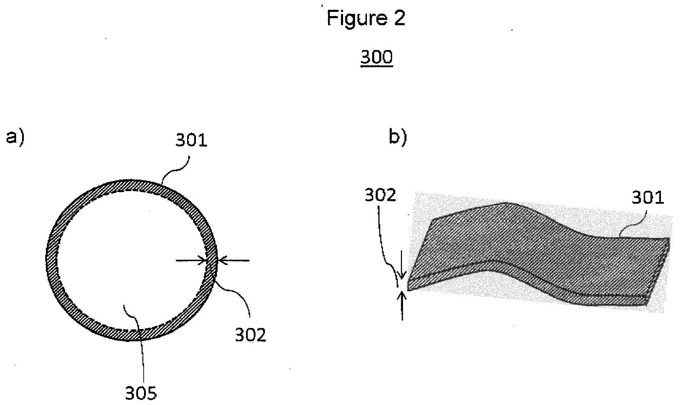

Figure 2a) shows a schematic cross-section of a confectionery item 300 according to the invention, preferably a fruit gum. The confectionery item 300 consistes of a wall 301 with a wall thickness 302 of 2 mm. The wall entirely contains an inner volume 305. The confectionery item 300 is a hollow sphere.

Figure 2b) shows a schematic diagram of a confectionery item 300 according to the invention, preferably a wine gum. The confectionery item 300 has a wall 301. The wall 301 has a wall thickness 302 of about 3 mm. The confectionery item is a corrugated sheet.

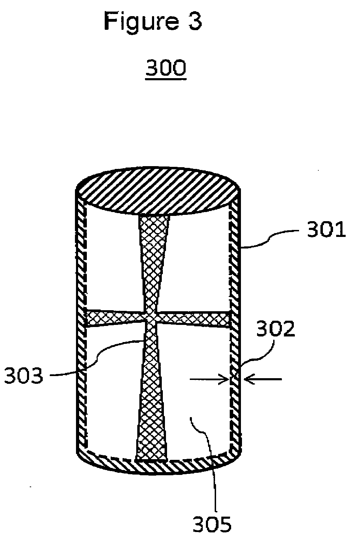

Figure 3 shows a schematic cross-section of a further confectionery item 300 according to the invention, preferably a fruit gum. The confectionery item 300 has a wall 301 with a wall thickness of about 1 mm. The wall entirely contains a inner volume 305. The confectionery item 300 is a hollow cylinder with closed ends and with a supporting structure 303 in its internal volume 305.

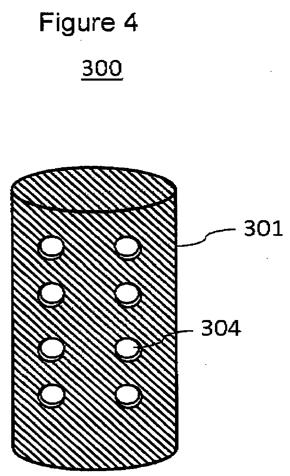

Figure 4 shows a schematic diagram of a further confectionery item 300 according to the invention, preferably a fruit gum. The confectionery item 300 has a wall 301 with a wall thickness 302 of 2 mm. The wall entirely contains an internal volume 305. The confectionery item 300 is a hollow cylinder with 8 openings 304 in the wall 301.

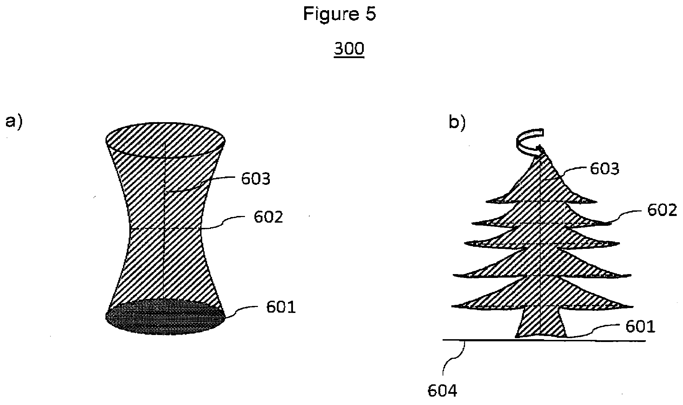

Figure 5a) shows a schematic diagram of a further confectionery item 300 according to the invention, preferably a foam gum. The confectionery item 300 has a basal surface 601, and is characterised by a line of height 603 perpendicular to the basal surface 601 defining height above the basal surface 601 and a diameter 602 extending perpendicular to the line of height 603, wherein the diameter 602 has two local maxima.

Figure 5b) show a schematic diagram of a further confectionery item 300 according to the invention, preferably a fruit gum. The confectionery item 300 has the 3-dimensional shape of a pine tree. The arrow indicates a rotational symmetry of the confectionery item 300. The confectionery item 300 has a basal surface 601, and is characterised by a line of height 603 perpendicular to the basal surface 601 defining height above the basal surface 601 and a diameter 602 extending perpendicular to the line of height 603, wherein the diameter 602 has five local maxima. The basal surface 601 allows the confectionery item 300 to be attached to a base 604. Drying of the confectionery item 300 causes the basal surface not to be planar. Attachment to the base 604 allows the confectionery item 300 to be stood up.

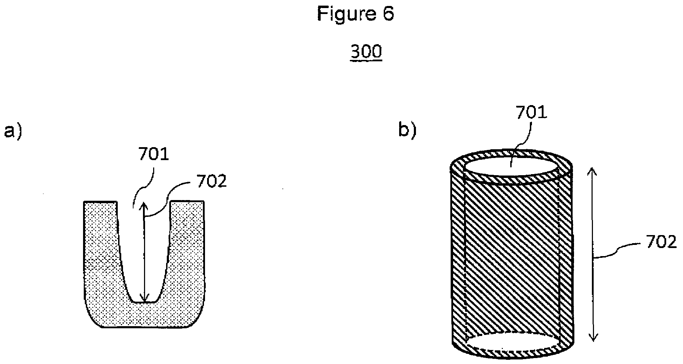

Figure 6a) shows a schematic cross-section of a further confectionery item 300 according to the invention. The confectionery item comprises a hole 701 with a depth 702 of 10 mm. The hole 701 is a depression. The confectionery item 300 is basin shaped.

Figure 6b) show a schematic diagram of a further confectionery item 300 according to the invention, preferably a fruit gum. The confectionery item 300 comprises a hole 701 with a depth 702 of 20 mm. The hole 701 is a channel which penetrates the item entirely. The confectionery item 300 is an open ended cylinder.

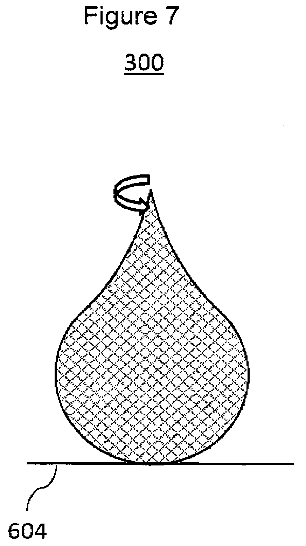

Figure 7 shows a schematic diagram of a further confectionery item 300 according to the invention, preferably a wine gum. The confectionery item 300 has no basal surface and in particular comprises no flat plane surfaces. Furthermore, the confectionery item 300 can not be placed stable on a base 604. The arrow indicates a rotational symmetry of the confectionery item 300.

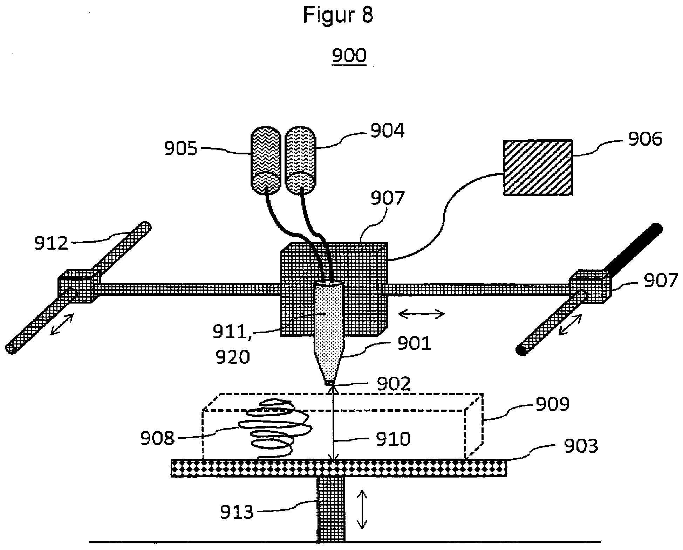

Figure 8 shows a schematic diagram of a device 900 according to the invention for the preparation of a confectionery item 300. The device comprises a cartridge comprising a first supply 905 and a cartridge comprising a second supply 904 both in fluid communication with a mixing chamber 911 comprising a mixer 920. The mixing chamber is in fluid communication with a nozzle 901, comprising an exit opening 902. The exit opening 902 of the nozzle 901 is characterised by a cross sectional surface area of 1 mm$^2$. The nozzle 901 is arranged over a substrate 903. The nozzle 901 can be made to trace a 3 dimensional shape in a three dimensional working volume 909 above the substrate 903 by means of a track system 912, a lifting system 913 for vertical translation of the substrate 903 (each indicated by arrows) and motors 907. In this way, the device 900 can be used for preparing confectionery items 300 with a variety of shapes within the working volume. The 3-D trajectory of the nozzle 901 and the ejection of the precursor material from the nozzle 901 is controlled by a computer 906. The computer 906 further comprises a hard disk on which CAD modules for a variety of shapes are stored. The computer controlled movement of the exit opening 902 traces a 3 dimensional shape lying within the working volume 909. During the movement along the 3 dimensional trajectory, the separation 910 between the substrate and the exit opening increases monotonically.

REFERENCE LIST

| 300 | Confectionery item |
| 301 | Wall |
| 302 | Wall thickness |
| 303 | Support structure |
| 304 | Opening |
| 305 | Internal volume |
| 601 | Basal suraface |
| 602 | Diameter |
| 603 | Height |
| 604 | Base |
| 701 | Hole |
| 702 | Depth |
| 900 | Printer |
| 901 | Nozzle |
| 902 | Exit opening |
| 903 | Substrate |
| 904 | Second Supply |
| 905 | First Supply |
| 906 | Computer |
| 907 | Motor |
| 908 | 3 dimensional trajectory |
| 909 | 3 dimensional working volume |
| 910 | Separation between exit opening and substrate |
| 912 | Track system |
| 913 | Lifting system |
| 920 | Mixer |
| 1000 | Mixing chamber with supplies connected |
| 1001 | First inlet |
| 1002 | Second inlet |
| 1003 | Mixing chamber |
| 1004 | Outlet |
| 1005 | Expulsive force |

**Claims**

1. A printer comprising as printer components:

   a. a first supply;
   b. a second supply;
   c. a mixing chamber having a mixer, a first inlet, a second inlet and an outlet;
   d. a nozzle;
   e. a support surface for a printed item;
   f. a means for moving the nozzle in a 3-dimensional trajectory relative to the support surface;

wherein:

the first supply is in fluid communication with the mixing chamber via the first inlet of the mixing chamber;
the second supply is in fluid communication with the mixing chamber via the second inlet of the mixing chamber;
the mixing chamber is in fluid communication with the nozzle via the outlet of the mixing chamber.

2. The printer according to claim 1, wherein the mixer is a static mixer.

3. The printer according to claim 1, wherein the mixer is a dynamic mixer.

4. The printer according to any of the preceding claims, wherein one or both of the following criteria is/are satisfied:

   a. The first supply comprises at least about 40 wt. % sweetener;
   b. The second supply comprises at least about 40 wt. % sweetener.

5. The printer according to any of the preceding claims, wherein the first supply or the second supply or both satisfy one or more of the following criteria:

   a. pH in the range from about 5.5 to about 8.5;
   b. Hydrocolloid content in the range from about 0.1 to about 15 wt. %, based on the dry weight of the supply;
   c. Acid content in the range from about 0 to about 0.1 wt. %, based on the dry weight of the supply;
   d. Complex viscosity in the range from about 700 to about 1300 Pa·s;
   e. Loss modulus in the range from about 3000 to about 7000 Pa;
   f. Storage modulus in the range from about 5000 to about 15000 Pa;
   g. Water content in the range from about 7 to about 45 wt. %, based on the total weight of the supply.

6. The printer according to any of the preceding claims, wherein the first supply or the second supply or both satisfy one or more of the following criteria:

   a. pH in the range from about 2 to about 5;
   b. Hydrocolloid content in the range from about 0 to about 0.1 wt. %, based on the dry weight of the supply;
   c. Acid content in the range from about 0.1 to about 15 wt. %, based on the dry weight of the supply;
   d. Complex viscosity in the range from about 5 to about 50000 Pa·s;
   e. Loss modulus in the range from about 50 to about 500000 Pa;
   f. Storage modulus in the range from about 10 to about 75000 Pa;
   g. Water content in the range from about 7 to about 45 wt. %, based on the total weight of the supply.

7. The printer according to any of the preceding claims, wherein the nozzle has an exit aperture with a cross sectional area in the range from about 0.1 to about 6 mm$^2$.

8. The printer according to any of the preceding claims, wherein one or both of the following criteria is/are satisfied:

   a. The first supply is provided in a detachable cartridge;
   b. The second supply is provided in a detachable cartridge.

9. The printer according to any of the preceding claims, wherein one or both of the following criteria is/are satisfied:

   a. The capacity of the first supply is in the range from about 0.01 to about 10001;
   b. The capacity of the second supply is in the range from about 0.01 to about 10001.

10. A process for the preparation of an item of confectionery comprising the following preparation steps:

   a. Provision of a printer according to any of the preceding claims;
   b. Supplying:

      - a first fluid from the first supply to the mixing chamber, and
      - a second fluid from the second supply to the mixing chamber;

c. Mixing the first fluid and the second fluid in the mixing chamber to obtain a precursor material;

d. Ejecting the precursor fluid from the mixing chamber via the nozzle onto the support surface to obtain the item of confectionery.

11. The process according to claim 10, wherein the nozzle traces a 3-D trajectory.

12. The process according to any of claims 10 or 11, wherein the weight ratio of the second fluid to the first fluid supplied in step b. is in the range from about 1:20 to about 3:2.

13. The process according to any of claims 10 to 12, wherein the precursor material satisfies one or more of the following criteria:

a. Complex viscosity in the range from about 500 to about 5000 Pa·s;

b. Loss modulus in the range from about 1000 to about 13000 Pa;

c. Storage modulus in the range from about 5000 to about 50000 Pa;

d. pH in the range from about 2 to about 5.5;

e. water content in the range from about 15 to about 24 wt. %.

14. An item of confectionery obtainable by a process according to any of the claims 10 to 13.

15. A use of a printer according to any of the claims 1 to 14 for preparing an item of confectionery.

EP 3 192 375 A1

Figure 1

22

Figure 2

300

a) 301

302

305

b) 302 301

# Figure 3

## 300

# Figure 4

## 300

301

304

Figure 5

300

a)

603

602

601

b)

603

602

601

604

Figure 6

300

a)

701

702

b)

701

702

# Figure 7

## 300

604

# Figur 8

## 900

Europäisches
Patentamt

European
Patent Office

Office européen
des brevets

# EUROPEAN SEARCH REPORT

Application Number

EP 16 00 0067

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/328747 A1 (LEVY DAVID [US]) 27 December 2012 (2012-12-27)<br><br>* paragraph [0045] - paragraph [0046]; claims 1-8; figures 7-11 *<br>* paragraph [0026] - paragraph [0028]; figure 1 * | 1,2,8, 10,11, 14,15 | INV.<br>A23G3/02<br>B29C67/00<br>A23P30/00<br>A23P20/20 |
| X | WO 2015/106059 A1 (3D SYSTEMS INC [US]) 16 July 2015 (2015-07-16)<br>* abstract; figures *<br>* paragraph [0034] - paragraph [0048] *<br>* paragraph [0068] - paragraph [0071] *<br>* paragraph [0086] - paragraph [0089] * | 1,8,10, 11,14,15 | |
| X | US 2014/183792 A1 (LEU MING C [US] ET AL) 3 July 2014 (2014-07-03)<br>* paragraph [0031] - paragraph [0035]; figures 8,9 * | 1 | |
| A | WO 2010/151202 A1 (ELECTROLUX AB [SE]; KLAEBER NICO [DE]) 29 December 2010 (2010-12-29)<br>* abstract; figures 1,3,4 *<br>* page 2, paragraph 3 - page 4, paragraph 1 * | 1-15 | TECHNICAL FIELDS SEARCHED (IPC)<br><br>A23P<br>A23G<br>B29C |
| E | US 2016/009029 A1 (COHEN ADAM [US] ET AL) 14 January 2016 (2016-01-14)<br>* paragraph [0044] - paragraph [0047]; figures 4,5,7,10,11 *<br>* paragraph [0131] * | 1,10,14, 15 | |

The present search report has been drawn up for all claims

| Place of search | Date of completion of the search | Examiner |
|---|---|---|
| Munich | 30 June 2016 | Gaiser, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 00 0067

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2016

| Patent document cited in search report | | Publication date | Patent family member(s) | | Publication date |
|---|---|---|---|---|---|
| US 2012328747 | A1 | 27-12-2012 | NONE | | |
| WO 2015106059 | A1 | 16-07-2015 | NONE | | |
| US 2014183792 | A1 | 03-07-2014 | NONE | | |
| WO 2010151202 | A1 | 29-12-2010 | AU | 2010263290 A1 | 22-12-2011 |
| | | | CA | 2764958 A1 | 29-12-2010 |
| | | | CN | 102802449 A | 28-11-2012 |
| | | | EP | 2445361 A1 | 02-05-2012 |
| | | | US | 2012168985 A1 | 05-07-2012 |
| | | | WO | 2010151202 A1 | 29-12-2010 |
| US 2016009029 | A1 | 14-01-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6200125 B
- US 2006044705 A
- US 7223428 B
- US 4501544 A
- EP 2820957 A

**Non-patent literature cited in the description**

- Gum-mibonbon. German Federation for Food Law and Food Science, 2012, 9
- *Härteprüfung an Kunststoffen und Gummi,* April 2004, 2
- *United States Pharmacopeia XX,* 1990, 1017
- guidelines for confectionery items. Cummibonbon. German Federation for Food Law and Food Science, 2012, 9